# DEMANDE DE BREVET EUROPEEN

(11) **EP 0 898 213 A1**
(43) Date de publication de la demande: **24.02.1999**
(21) Numéro de dépôt: 98401882.0
(22) Date de dépôt: 24.07.1998
(51) Int. Cl.: G05B 19/042

(54) **Module de contrôle de puissance, système d'électronique de puissance incluant ces modules, et applications de ce système**

(30) Priorité: 24.07.1997 FR 9709403
(71) Demandeur: Intelligent Electronic Systems, 34000 Montpellier (FR)
(72) Inventeur: Pierron, Maurice, F-34830 Jacou (FR); Glaize, Christian, F-34170 Castelnau le Lez (FR)
(74) Mandataire: Pontet, Bernard

(57) **Abrégé**

Module de contrôle de puissance (30) pour contrôler la puissance électrique fournie par une unité d'alimentation à une charge utilisatrice, comportant des composants électriques de commande (37) et une pluralité d'interrupteurs semi-conducteurs de puissance (36) montés sur une carte support (300) de type substrat métallique isolé ou circuit imprimé.

Les interconnexions électriques de puissance entre l'unité d'alimentation et le module de contrôle de puissance d'une part, et entre le module de contrôle de puissance et la charge utilisatrice d'autre part, sont réalisées par des entretoises conductrices (30-35) montées sur la carte support (300), connectées électriquement à celle-ci, et maintenues par une résine d'enrobage(310).

Utilisation notamment en traction électrique et en manutention

## Description

La présente invention concerne un module de contrôle de puissance électrique. Elle vise également un système d'électronique de puissance incluant ces modules, ainsi que des applications de ce système, notamment en traction et en manutention.

La plupart des systèmes d'électronique de puissance sont constitués d'organes de puissance (essentiellement des interrupteurs semi-conducteurs) et de composants de commande (composants discrets tels que résistances, condensateurs,... circuits intégrés analogiques (amplificateurs opérationnels, régulateurs de tension,...) et numériques (microcontrôleurs, microprocesseurs, circuits programmables,...). Il est nécessaire de rajouter des organes d'interconnexion (connecteurs) aussi bien côté puissance que côté commande. La nature très différente de ces divers constituants impose un câblage long et onéreux puisque les opérations de montage sont différentes pour ces divers constituants.

De plus, dans la plupart des systèmes d'électronique de puissance relativement complexes mettant en oeuvre des organes de puissance tels que des moteurs, variateurs, convertisseurs ou chargeurs et des interfaces de toute nature, l'architecture communément adoptée consiste à commander et contrôler ces organes de puissance et ces interfaces depuis une unité centrale de contrôle et de traitement qui traite l'ensemble des informations et signaux collectés sur ces systèmes et émet en retour des ordres et instructions de commande à destination des différents organes du système. Une conséquence directe de ce choix de centralisation du traitement des informations au sein de ces systèmes est de nécessiter un câblage et une connectique importants pour véhiculer l'ensemble des signaux échangés entre les divers organes et l'unité centrale, ces contraintes techniques entraînant des surcoûts et des difficultés de maintenance.

Le but de la présente invention est de simplifier la réalisation de ces systèmes d'électronique de puissance pour obtenir un produit aussi performant, voire plus performant, et moins coûteux que les solutions actuelles, en proposant pour la réalisation de ces systèmes une structure de module de contrôle de puissance procurant une simplification des connexions entre modules de ces systèmes.

Cet objectif est atteint avec un module de contrôle de puissance pour contrôler la puissance électrique fournie par une unité d'alimentation à une charge utilisatrice, comportant des composants électriques de commande et une pluralité d'interrupteurs semi-conducteurs de puissance montés sur une carte support.

Suivant l'invention, les interconnexions électriques de puissance entre l'unité d'alimentation et le module de contrôle de puissance d'une part, et entre le module de contrôle de puissance et la charge utilisatrice d'autre part, sont réalisées par des entretoises conductrices montées sur ladite carte support et connectées électriquement à celle-ci.

Cette carte support peut être un circuit imprimé ou un substrat métallique isolé (SMI) sur lequel sont implantés les composants électroniques à la fois de puissance et de commande.

Les entretoises utilisées comme interconnexions électriques peuvent être soudées ou brasées sur les pistes du circuit imprimé ou du substrat métallique isolé dans la même opération que les autres composants, au contraire des boîtiers standards qui utilisent des inserts inclus dans le capot et qui sont connectés par fils ou plaques au circuit de puissance. Il s'en suit une diminution significative du nombre d'opérations de montage.

Les entretoises sont de préférence maintenues dans une résine d'enrobage dont l'épaisseur est déterminée de façon à ce que les faces supérieures des entretoises dépassent ou au moins affleurent la surface supérieure de l'enrobage. Ces entretoises sont trouées et filetées, permettant ainsi la fixation par vissage d'un câble ou d'une plaque conductrice.

Afin d'obtenir la meilleure immobilisation possible des entretoises par la résine d'enrobage, ces entretoises présentent avantageusement une section possédant des aspérités convexes et/ou concaves. On pourra ainsi choisir une section polygonale (par exemple, carrée, hexagonale,...) ou encore une section formée d'un assemblages de courbes convexes et/ou concaves éventuellement reliées par des segments de droites à la manière, par exemple, d'une empreinte TORX.

Suivant un autre aspect de l'invention, il est proposé un système d'électronique de puissance et de commande avec une conception qui conduise à des choix d'architecture globale moins lourds et moins coûteux que les solutions actuelles.

Cet objectif est atteint avec un système d'électronique de puissance et de commande comprenant un ensemble de modules réalisant chacun une fonction parmi un ensemble de fonctions de contrôle de puissance, de fonctions de captation de signaux et de fonctions de traitement d'informations, et un bus de communication bidirectionnelle reliant entre eux lesdits modules, chaque module étant en outre agencé pour assurer une commande locale intégrée des moyens fonctionnels contenus dans ce module.

Ce système d'électronique de puissance est caractérisé en ce que chacun de ses modules de contrôle de puissance est interconnecté d'une part à une unité d'alimentation et d'autre part à une charge au moyen d'entretoises conductrices montées sur la carte supportant les interrupteurs de puissance de ce module de contrôle de puissance et connectées électriquement à ladite carte support.

Le système d'électronique de puissance selon l'invention est conçu selon une architecture modulaire à intelligence décentralisée. Il en résulte une sécurité accrue puisque cette architecture est intrinsèquement redondante. Tous les modules surveillent, via le bus de communication bidirectionnel multiplexé, tous les autres modules ainsi que les capteurs du système.

Deux types de modules sont mis en oeuvre pour cette architecture décentralisée:
- des modules de contrôle de puissance avec commande intégrée,
- des modules sans puissance tels qu'un timon qui n'a qu'une fonction de lecture d'une position (capteur), ou une jauge, ou encore un bloc d'affichage d'informations.

Dans un module de contrôle de puissance selon l'invention, les interrupteurs de chaque module de contrôle de puissance sont commandés à partir d'informations transitant via le bus de communication bidirectionnel multiplexé relié à un module de pilotage.

Lorsqu'un système selon l'invention est installé dans un équipement mobile, on peut avantageusement prévoir que ce système comprenne un premier module de contrôle de puissance prévu pour contrôler la puissance électrique fournie à un moteur de traction embarqué dans un mobile et un second module de contrôle de puissance prévu pour contrôler la puissance électrique fournie à un moteur de pompage hydraulique, lesdits premier et second modules de contrôle de puissance étant connectés au bus multiplexé.

Les modules de contrôle de puissance selon l'invention peuvent être appliqués à la commande d'un moteur de traction. Ce dernier peut aussi bien être à courant continu (à excitation série, séparée, à aimants permanents), qu'à courant alternatif (asynchrone, synchrone, à réluctance variable).

Lorsque ce module de contrôle de puissance est appliqué à la commande en vitesse variable d'un moteur à excitation série, il comprend classiquement quatre contacteurs mécaniques dans un montage en pont disposé en série d'une part, avec l'enroulement d'excitation du moteur relié à des moyens de roue libre et d'autre part, avec un interrupteur commandé fonctionnant en hacheur.

Dans la présente invention, on substitue aux quatre contacteurs mécaniques et au hacheur quatre interrupteurs semi-conducteurs commandés en pont, deux interrupteurs reliés à une même ligne assurant les fonctions d'inversion de quadrants de fonctionnement tandis que les deux autres interrupteurs sont commandés en découpage.

Les moyens de roue libre sont de préférence réalisés par le canal d'un transistor MOS fonctionnant en inverse. Le transistor est donc utilisé en redresseur synchrone.

D'autres particularités et avantages de l'invention apparaîtront encore dans la description ci-après. Aux dessins annexés donnés à titre d'exemples non limitatifs:
- la figure 1 est un schéma synoptique d'un système d'électronique de puissance selon l'invention,
- la figure 2 est un schéma d'un système d'alimentation de moteur à excitation série, utilisé dans l'art antérieur,
- la figure 3 est un schéma d'un système d'alimentation de moteur à excitation série selon l'invention,
- la figure 4 représente un module selon l'invention pourvu d'entretoises de connexion; et
- la figure 5 représente plusieurs exemples de sections d'entretoise.

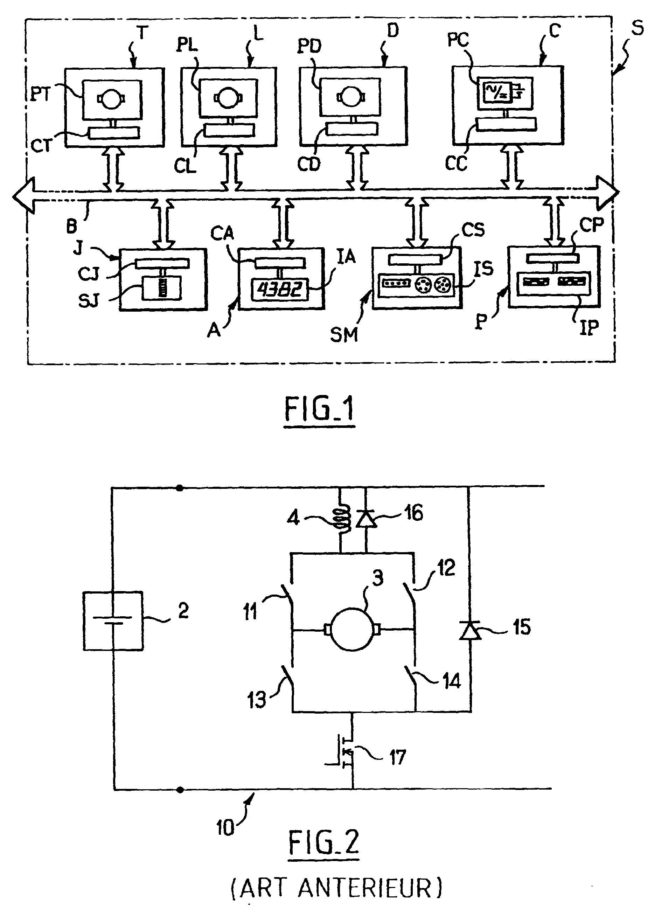

On va tout d'abord décrire la structure d'un système d'électronique de puissance selon l'invention, en référence à la figure 1. Ce système S comprend des modules de puissance T, L, D, C, un module de captation J, et des modules de traitement d'interface A, SM, P, l'ensemble de ces modules communiquant via un bus bidirectionnel B. Les modules de puissance comprennent par exemple un module de traction T, un module de levage L, un module de direction D et un module de charge de batterie C. Chaque module de contrôle de puissance T, L, D, C comprend un organe fonctionnel PT, PL, PD, PC et un organe de commande locale intégrée CT, CL, CD, CC. Les modules de captation et d'interface comprennent par exemple un module de jauge J, un module d'affichage A, un module de diagnostic de service après vente SM et un module de paramétrage P. Chaque module de captation et d'interface J, A, SM, P comprend un organe d'interface SJ (jauge), IA (afficheurs), IS (connecteurs de diagnostic) et IP (organes de paramétrage), et un organe de commande locale intégrée CJ, CA, CS et CP.

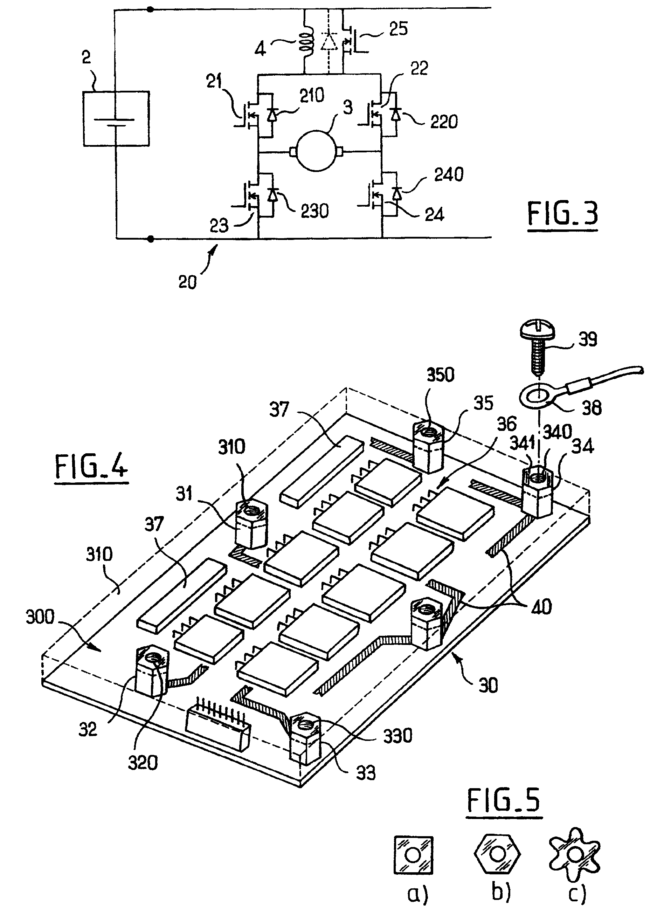

On va maintenant décrire, en référence à la figure 3, un exemple de module de contrôle de puissance selon l'invention, conçu pour alimenter un moteur à excitation série, après avoir rappelé l'état de la technique dans ce domaine illustré par la figure 2.

Les systèmes actuels de commande d'un moteur à excitation série comprennent par exemple un module de contrôle de puissance 10 incluant, en référence à la figure 2, quatre contacteurs électromécaniques 11-14 agencés en pont autour du moteur 3 pour la fonction marche/arrêt ainsi que pour la fonction marche Avant/marche Arrière, un hacheur à un transistor 17, par exemple un transistor MOS lorsqu'il s'agit d'un moteur alimenté en relativement basse tension (quelques dizaines de volts), et une diode de roue libre 15 pour la variation de vitesse (ou de couple). Une diode de roue libre 16 est nécessairement placée en parallèle sur l'enroulement d'excitation série 4.

Dans le module de contrôle de puissance 20 selon l'invention, on substitue aux quatre contacteurs mécaniques et au hacheur, quatre interrupteurs semi-conducteurs 21-24, en pratique des transistors MOS lorsqu'il s'agit d'un dispositif alimenté en relativement basse tension, à savoir quelques dizaines de volts. Le module de contrôle de puissance 20 comprend alors, en référence à la figure 2 :
- un pont de transistors MOS 21-24 autour du moteur 3, fournissant en interne les diodes de roue libre 210, 220, 230 et 240, et
- un transistor 25 en inverse monté en parallèle sur l'enroulement d'excitation série 4, qui assure la fonction de roue libre.

Dans un premier mode d'utilisation, les deux interrupteurs d'une même ligne (par exemple ceux du bas 23, 24) fonctionnent en tout ou rien et commandent les inversions de quadrants de fonctionnement du moteur 3. Les deux autres interrupteurs (par exemple ceux du haut 21, 22) fonctionnent en découpage et assurent les fonctions de contrôle de couple et/ou de vitesse du moteur 3.

Dans un second mode d'utilisation, on peut aussi utiliser un interrupteur de la ligne du bas en commande fixe et découper sur les deux interrupteurs de l'autre colonne. On impose alors la tension moyenne aux bornes de l'induit du moteur 3 et par conséquent sa vitesse. Ceci simplifie notablement le ralentissement et le freinage (puisque, pour ralentir ou freiner, il suffit d'imposer une vitesse plus basse que la vitesse en cours). Ce mode d'utilisation améliore aussi le rendement. En effet, dans les systèmes actuels représentant l'art antérieur, le ralentissement et le freinage se font à contre-courant, c'est-à-dire que l'on configure les interrupteurs électromécaniques pour l'autre sens de marche. Puis on injecte un courant contrôlé par le hacheur. La batterie doit donc fournir un courant. Cette énergie électrique et l'énergie mécanique de freinage sont toutes deux dissipées en chaleur. De plus, il est nécessaire de détecter précisément le passage à la vitesse nulle pour arrêter l'injection de courant.

Au contraire, dans le module de contrôle de puissance selon l'invention, le hacheur fonctionne en réversibilité. C'est-à-dire qu'il peut transiter l'énergie électrique aussi bien de la batterie vers le moteur que du moteur vers la batterie. Il s'agit en effet d'un hacheur 4 quadrants alors que le hacheur associé aux contacteurs électromécaniques n'est pas réversible car il ne fonctionne que dans un quadrant (il ne peut faire transiter l'énergie électrique que de la batterie vers le moteur). Dans un module selon l'invention, pendant les phases de ralentissement et de freinage, le courant du moteur recharge la batterie d'accumulateurs, au lieu de la décharger. Le rendement est donc nettement amélioré. Il n'y a plus à prévoir de capteur de vitesse nulle.

Dans les deux modes d'utilisation, ce sont les diodes internes aux transistors MOS qui jouent le rôle de roue libre du hacheur. Afin d'obtenir un meilleur rendement de l'ensemble, la diode de roue libre d'excitation peut être remplacée par un transistor MOS fonctionnant en inverse et utilisé en redresseur synchrone. La diode interne à ce transistor MOS est donc toujours court-circuitée par le canal du transistor MOS car la chute de tension dans le canal du transistor MOS est inférieure à celle de la diode.

Enfin, la structure choisie permet de découpler le contrôle des courants d'induit et d'excitation, caractéristique intéressante en freinage avec un moteur à excitation série. Pour cela, on remarque que si on fait conduire simultanément les deux transistors d'une même colonne, ces deux transistors et la "diode de roue libre" d'excitation jouent le rôle d'un hacheur qui permet de contrôler la tension appliquée à l'enroulement d'excitation et, par conséquent, le courant d'excitation.

Les modules de contrôle de puissance et de traitement d'information mis en oeuvre dans un système d'électronique de puissance selon l'invention peuvent être avantageusement mais non exclusivement réalisés en utilisant la technique de support SMI (Substrat Métallique Isolé), sous la forme de cartes pourvues de moyens de connexion adaptés.

En référence à la figure 4, un module de contrôle de puissance 30 comporte sur un circuit imprimé ou un SMI 300, d'une part des composants électroniques, notamment des composants de puissance 36, des composants de commande 37, et d'autre part des entretoises 31-35 assurant des fonctions de connexion électrique de ce module avec par exemple une unité d'alimentation et une charge utilisatrice (non représentées). Ces entretoises 31-35, soudées ou brasées sur le circuit 300 dans la même opération que les autres composants du module, sont en contact électrique avec des pistes conductrices 40 de ce circuit. Elles sont en outre maintenues dans une résine d'enrobage 310, pour des raisons de tenue mécanique, en particulier pour permettre un couple de serrage suffisant des vis de connexion.

Chaque entretoise 31-35 présente un trou central fileté 310, 320, 330, 340, 350 prévu pour recevoir une vis de fixation 39 permettant de fixer solidement une cosse de connexion 38 contre la face supérieure 341 de cette entretoise.

L'épaisseur de la résine d'enrobage 310 est déterminée de telle que façon que les faces supérieures des entretoises se trouvent au dessus de la surface supérieure de l'enrobage ou au moins affleurent cette surface supérieure, pour permettre des connexions électriques correctes sur les faces supérieures 341 respectives de ces entretoises.

Les entretoises peuvent présenter différentes sections appropriés pour assurer un bonne tenue mécanique, comme l'illustre la figure 5 qui montre à titre d'exemples non limitatifs, une section carrée a), une section hexagonale b) utilisée dans l'exemple de réalisation de la figure 4, et une section cannelée c).

Il est à noter que ces techniques de réalisation peuvent tout autant être mises en oeuvre en basse fréquence (BF) qu'en haute fréquence (HF). En HF, on peut avantageusement mettre en oeuvre une mise en parallèle de cellules de commutation telle que décrite dans le brevet français No 9213791 au nom du présent déposant. S'agissant du fonctionnement en basse fréquence, c'est à dire dans le spectre audible, ce fonctionnement ne pose pas de problème de bruit acoustique dans le cas des applications en traction électrique, car le bruit des réducteurs de vitesse pour le moteur de traction ou le bruit d'une pompe hydraulique sont notablement supérieurs.

Le système d'électronique de puissance selon l'invention trouve en particulier tout son intérêt lorsqu'il est mis en oeuvre pour la conception d'un module de traction directement intégré à un moteur de traction solidaire d'une roue directrice. Actuellement dans l'art antérieur, 4 fils de puissance (2 fils d'induit et 2 fils d'excitation) et 15 à 20 fils de commande sont nécessaires pour réaliser les fonctions d'alimentation et de commande.

Le système selon l'invention permet de ne passer que 2 fils de puissance et 4 fils de commande pour le bus multiplexé. Il en résulte une économie de fils ultrasouples, une plus grande facilité d'implantation, et une compatibilité électromagnétique améliorée.

Avec le système selon l'invention, on peut envisager l'utilisation d'une pompe hydraulique en vitesse variable pour le levage sur des transpalettes et des chariots de manutention, alors que jusqu'à présent, on ne prévoit pour ces pompes qu'un fonctionnement en tout ou rien. Un premier intérêt est une limitation du courant de démarrage du moteur entraînant une plus grande durée de vie du collecteur du moteur et de la batterie d'alimentation. Un autre intérêt est décrit ci-après : les transpalettes et les chariots de manutention ne soulèvent la charge que de quelques centimètres, au contraire des gerbeurs et transgerbeurs qui soulèvent leur charge à plusieurs mètres. Pour ces derniers, il est concevable de ne pas donner d'à-coups sur cette charge lorsqu'elle est en position haute. Le levage est obtenu en envoyant de l'huile dans un piston. Le système traditionnellement utilisé est une pompe hydraulique fonctionnant en tout ou rien suivie d'un robinet (vanne proportionnelle) à commande manuelle. Le rendement est très bas.

Le système selon l'invention permet désormais d'utiliser une pompe hydraulique en vitesse variable derrière un convertisseur à transistor pour éliminer la vanne proportionnelle. Le rendement est alors notablement amélioré. On peut encore améliorer le dispositif en utilisant la pompe hydraulique en réversibilité. La montée et la descente peuvent alors être contrôlées de manière progressive. En effet, dans l'état de l'art, la pompe est utilisée uniquement à la montée pour remplir le piston de levage. Pour descendre la charge, une vanne commandée permet de retourner au réservoir l'huile contenue dans le piston. On propose désormais d'utiliser la pompe pour le contrôle de la descente.

On peut également envisager l'utilisation d'une pompe hydraulique en vitesse variable pour la traction en associant une pompe hydraulique et un moteur hydraulique, alors que jusqu'à présent, on ne prévoit pour ces pompes qu'un fonctionnement en tout ou rien. Un premier intérêt est une limitation du courant de démarrage du moteur entraînant une plus grande durée de vie du collecteur du moteur et de la batterie d'alimentation. Un autre intérêt est d'augmenter le rendement de la fonction traction puisqu'on n'injecte dans le moteur électrique qui entraîne la pompe hydraulique que l'énergie nécessaire. Dans le système traditionnellement utilisé, la pompe hydraulique fonctionne en tout ou rien et l'huile superflue est directement retournée au réservoir. Le rendement est très bas.

De nombreux modules de contrôle de puissance mis en oeuvre dans un système selon l'invention peuvent être envisagés, notamment pour les fonctions suivantes : traction, levage, direction, charge de batterie, jauge, affichage vers l'utilisateur, affichage pour le Service Après Vente, module de diagnostic, module de paramétrage (éventuellement amovible),...

Dans le cas d'une utilisation en traction, on peut avantageusement prévoir les fonctions suivantes : limitation du courant de démarrage, pilotage (asservissement de couple et/ou d'accélération et/ou de vitesse) d'un moteur de traction en fonction de la position d'un guidon de commande.

Le système selon l'invention peut notamment être appliqué dans tout véhicule motorisé électriquement, par exemple, des voitures électriques, camions électriques, bus et minibus électriques, nacelles à bras, nacelles à ciseaux, chariots de manutention, fauteuils pour handicapés, machines de nettoyage industriel, voitures de golf, véhicules de loisirs,...)

Suivant l'application, on utilisera tout ou partie des modules précités.

Ce système peut aussi être appliqué pour des nacelles, avec pour objectif principal de leur procurer une plus grande souplesse de fonctionnement avec une commande en vitesse variable.

Bien sûr, l'invention n'est pas limitée aux exemples qui viennent d'être décrits et de nombreux aménagements peuvent être apportés à ces exemples sans sortir du cadre de l'invention.

## Revendications

1. Module de contrôle de puissance (T, L, D, C, 30) pour contrôler la puissance électrique fournie par une unité d'alimentation à une charge utilisatrice, comportant des composants électriques de commande (37) et une pluralité d'interrupteurs semi-conducteurs de puissance (36) montés sur une carte support (300), caractérisé en ce que les interconnexions électriques de puissance entre l'unité d'alimentation et le module de contrôle de puissance (T, L, D, C, 30) d'une part, et entre ledit module de contrôle de puissance (T, L, D, C, 30) et la charge utilisatrice d'autre part, sont réalisées par des entretoises conductrices (31-35) montées sur ladite carte support (300) et connectées électriquement à celle-ci.

2. Module de contrôle de puissance (30) selon la revendication 1, caractérisé en ce que les entretoises (31-35) sont maintenues par une résine d'enrobage (310).

3. Module de contrôle de puissance (30) selon la revendication 2, caractérisé en ce que les entretoises (31-35) présentent une section non circulaire déterminée pour renforcer leur tenue dans la résine d'enrobage (310).

4. Module de contrôle de puissance selon la revendication 3, caractérisé en ce que les entretoises présentent une section possédant des aspérités convexes et/ou concaves.

5. Module de contrôle de puissance selon l'une quelconque des revendications précédentes, caractérisé en ce que l'unité d'alimentation comporte une batterie d'accumulateurs.

6. Module de contrôle de puissance selon la revendication 5, caractérisé en ce qu'il est de type réversible.

7. Module de contrôle de puissance (T) selon l'une des revendications 5 ou 6, caractérisé en ce qu'il est prévu pour contrôler la puissance électrique fournie à un moteur de traction embarqué sur un mobile.

8. Module de contrôle de puissance selon l'une quelconque des revendications précédentes, caractérisé en ce que la carte support des interrupteurs est de type substrat métallique isolé.

9. Module de contrôle de puissance selon l'une quelconque des revendications 1 à 7, caractérisé en ce que la carte support des interrupteurs est de type circuit imprimé.

10. Module de contrôle de puissance (20) selon l'une quelconque des revendications précédentes, appliqué à la commande en vitesse variable d'un moteur à excitation série (3, 4), comprenant un montage de puissance en pont comportant quatre interrupteurs commandés (21-24) et disposé en série avec l'enroulement d'excitation (4), et une diode de roue libre disposée en parallèle avec ledit enroulement d'excitation (4).

11. Module de contrôle de puissance (20) selon la revendication 10, caractérisé en ce qu'il est associé à un premier mode d'utilisation dans lequel deux interrupteurs (23, 24) reliés à une même ligne assurent les fonctions d'inversion de quadrants de fonctionnement tandis que les deux autres interrupteurs (21, 22) sont commandés en découpage.

12. Module de contrôle de puissance (20) selon la revendication 10, caractérisé en ce qu'il est associé à un second mode d'utilisation dans lequel un interrupteur (23) du bas d'une première colonne est commandé en conduction permanente, tandis que les deux interrupteurs (22, 24) de la seconde colonne sont commandés en découpage.

13. Module de contrôle de puissance (20) selon l'une des revendications 10 à 12, caractérisé en ce qu'il est associé à un troisième mode d'utilisation dans lequel on découple le contrôle des courants d'induit et d'excitation du moteur (3).

14. Module de contrôle de puissance selon l'une quelconque des revendications 10 à 13, caractérisé en ce que la diode de roue libre est réalisée par un transistor MOS fonctionnant en inverse et utilisé en redresseur synchrone.

15. Système d'électronique de puissance et de commande (S), comprenant un ensemble de modules (T, L, D, C, J, A, S, P) réalisant chacun une fonction parmi un ensemble de fonctions de contrôle de puissance, de fonctions de captation de signaux et de fonctions de traitement d'informations, et un bus de communication bidirectionnel (B) reliant entre eux lesdits modules, chaque module (T, L, D, C, J, A, SM, P) étant en outre agencé pour assurer une commande locale intégrée des moyens fonctionnels (PT, PL, PD, PC, SJ, IA, IS, IP) contenus dans ce module, caractérisé en ce que chacun de ses modules de contrôle de puissance (T, L, D, C) est interconnecté d'une part à une unité d'alimentation et d'autre part à une charge utilisatrice au moyen d'entretoises conductrices montées sur la carte supportant les interrupteurs de puissance de ce module de contrôle de puissance et connectées électriquement à ladite carte support.

16. Système (S) selon la revendication 15, caractérisé en ce que les interrupteurs du module de contrôle de puissance sont commandés à partir d'informations transitant via un bus de communication bidirectionnel multiplexé (B) en provenance d'un module de pilotage.

17. Système (S) selon l'une des revendications 15 ou 16, caractérisé en ce que chaque module (T, L, D, C, J, A, SM, P) est agencé pour surveiller les autres modules via le bus de communication bidirectionnel multiplexé (B).

18. Système selon la revendication 17, installé dans un équipement mobile, caractérisé en ce qu'il comprend en outre un premier module de contrôle de puissance prévu pour contrôler la puissance électrique fournie à un moteur de traction embarqué dans un mobile et un second module de contrôle de puissance prévu pour contrôler la puissance électrique fournie à un moteur de pompage hydraulique, lesdits premier et second modules variateurs de puissance étant connectés au bus de communication bidirectionnel multiplexé.

19. Système selon la revendication 18, caractérisé en ce que ce second module de contrôle de puissance est de type réversible.

20. Application d'un système d'électronique de puissance selon l'une des revendications 15 à 19, en traction électrique, notamment dans le domaine de la manutention.

21. Application d'un système d'électronique de puissance selon l'une des revendications 15 à 19, pour la commande d'une pompe hydraulique appliquée au levage et/ou à la traction à vitesse variable.
